# EUROPEAN PATENT APPLICATION

(11) **EP 2 738 933 A1**
(43) Date of publication of application: **04.06.2014**
(21) Application number: 13192966.3
(22) Date of filing: 14.11.2013
(51) Int. Cl.: H02M 7/797, H01L 29/16, H02P 27/08

(54) **System and method for improving power conversion efficiency**

(30) Priority: 30.11.2012 CN 201210507595
(71) Applicant: General Electric Company, Schenectady, New York 12345 (US)
(72) Inventor: Mao, Saijun, 201203 Shanghai (CN)
(74) Representative: Bedford, Grant Richard

(57) **Abstract**

A power conversion system 10 includes at least one switching unit 25. The switching unit 25 includes a switching device 20 including a channel and a body diode 22 integrated with the channel. The switching device 20 includes a first terminal, a second terminal, and a third terminal. The channel provides a positive direction current flow path to allow a positive direction current to flow through in response to a first turn-on switching control signal supplied to the first terminal. The body diode 22 provides a first negative direction current flow path to allow a negative direction current to flow through in response to a first turn-off switching control signal. The channel provides a second negative direction current flow path to allow the negative direction current to flow through in response to a second turn-on switching control signal. A method for operating the power conversion system 10 is also provided.

## Description

Various embodiments of the disclosure relate generally to systems and methods for improving power conversion efficiency in supplying power, useful in a variety of applications such as a rectifier used in an electric vehicle (EV) system.

With the development of the power electronics technology, a power conversion system has been widely used as a bridge for converting one form of input power into another form of output power as required by a load. Usually, the power conversion system is configured with at least one semiconductor switching device. By providing switching control signals to the switching device, output power can be controlled in a more flexible way. However, how to improve an efficiency of the power conversion system is still a big problem in operating a power conversion system.

Recently, although a number of control strategies such as a zero-voltage switching (ZVS) strategy, a zero-current switching (ZCS) strategy, and an optimized pulse width modulation (PWM) strategy, as well as topologies such as a three-level topology, etc., have been proposed to improve the efficiency of the power conversion device, there is still a space for the improvement of the efficiency.

Therefore, it is desirable to provide new or improved systems and methods for improving power conversion efficiency.

In accordance with one embodiment disclosed herein, a power conversion system is provided. The power conversion system includes a control module and a power conversion device. The control module is configured to provide switching control signals to the power conversion device. The power conversion device includes a first port, a second port, and at least one switching unit electrically coupled between the first port and the second port. The switching unit includes a switching device. The switching device includes a channel and a body diode integrated with the channel. The switching device includes a first terminal configured to receive switching control signals provided from the control module, a second terminal and a third terminal configured to provide current flow paths. The channel is configured to provide a positive direction current flow path to allow a positive direction current to flow from the second terminal to the third terminal in response to a first turn-on switching control signal supplied to the first terminal. The body diode of the switching device is configured to provide a first negative direction current flow path to allow a negative direction current to flow from the third terminal to the second terminal in response to a first turn-off switching control signal supplied to the first terminal. The channel of the switching device is configured to provide a second negative direction current flow path to allow the negative direction current to flow from the third terminal to the second terminal in response to a second turn-on switching control signal supplied to the first terminal.

In accordance with another embodiment disclosed herein, a method for operating a power conversion system is provided. The method includes providing a first turn-on switching control signal to a first terminal of a switching device of the power conversion system to allow a positive direction current to flow from a second terminal to a third terminal of the switching device through a positive direction current flow path provided by a channel of the switching device. The method includes providing a second turn-on switching control signal to the first terminal of the switching device of the power conversion system to allow a negative direction current to flow from the third terminal to the second terminal through a negative direction flow path provided by the channel of the switching device.

Various features, aspects, and advantages of the present disclosure will become better understood when the following detailed description is read with reference to the accompanying drawings in which like characters represent like parts throughout the drawings, wherein:
FIG. 1 is a schematic diagram of a power conversion system in accordance with an exemplary embodiment of the present disclosure;
FIG. 2 is a schematic diagram of a power conversion system in accordance with another exemplary embodiment of the present disclosure;
FIG. 3 is a graph showing various waveforms of a switching unit shown in FIG. 1 or 2 in response to implementation of a modulation strategy in accordance with an exemplary embodiment of the present disclosure;
FIG. 4 is a graph showing various waveforms of a switching unit shown in FIG. 1 or 2 in response to implementation of another modulation strategy in accordance with an exemplary embodiment of the present disclosure;
FIG. 5 is a graph showing various waveforms of a switching unit shown in FIG. 1 or 2 in response to implementation of yet another modulation strategy in accordance with an exemplary embodiment of the present disclosure;
FIG. 6 is a schematic diagram of a rectifier used in an electric vehicle (EV) system in accordance with an exemplary embodiment of the present disclosure;
FIG. 7 is a graph showing various waveforms of the rectifier shown in FIG. 6 in response to implementation of a space vector pulse width modulation (SVPWM) strategy in accordance with an exemplary embodiment of the present disclosure;
FIG. 8 is a graph showing various waveforms of the rectifier shown in FIG. 6 in response to implementation of a combination of the SVPWM strategy and a reverse channel conduction strategy in accordance with an exemplary embodiment of the present disclosure;
FIG. 9 is a schematic diagram of current flow path of the rectifier shown in FIG. 6 with a SVPWM strategy, in particular, mode 1 shown in FIG. 7 in accordance with an exemplary embodiment of the present disclosure; and
FIG. 10 is a schematic diagram of current flow path of the rectifier shown in FIG. 6 with a combination of the SVPWM strategy and a reverse channel conduction strategy, in particular, mode 1 shown in FIG. 8 in accordance with an exemplary embodiment of the present disclosure.

In an effort to provide a concise description of these embodiments, not all features of an actual implementation are described in one or more specific embodiments. It should be appreciated that in the development of any such actual implementation, as in any engineering or design project, numerous implementation-specific decisions must be made to achieve the developers' specific goals, such as compliance with system-related and business-related constraints, which may vary from one implementation to another. Moreover, it should be appreciated that such a development effort might be complex and time consuming, but may nevertheless be a routine undertaking of design, fabrication, and manufacture for those of ordinary skill having the benefit of this disclosure.

Unless defined otherwise, technical and scientific terms used herein have the same meaning as is commonly understood by one of ordinary skill in the art to which this disclosure belongs. The terms "first," "second," "third," and the like, as used herein do not denote any order, quantity, or importance, but rather are used to distinguish one element from another. Also, the terms "a" and "an" do not denote a limitation of quantity, but rather denote the presence of at least one of the referenced items. The term "or" is meant to be inclusive and mean either any, several, or all of the listed items. The use of "including," "comprising," or "having," and variations thereof herein are meant to encompass the items listed thereafter and equivalents thereof as well as additional items.

As used herein, the terms "may," "can," "may be," and "can be" indicate a possibility of an occurrence within a set of circumstances; a possession of a specified property, characteristic or function; and/or qualify another verb by expressing one or more of an ability, capability, or possibility associated with the qualified verb. Accordingly, usage of "may," "can," "may be," and "can be" indicate that a modified term is apparently appropriate, capable, or suitable for an indicated capacity, function, or usage, while taking into account that in some circumstances, the modified term may sometimes not be appropriate, capable, or suitable. For example, in some circumstances, an event or capacity may be expected, while in other circumstances, the event or capacity may not occur. This distinction is captured by the terms "may," "can," "may be," and "can be".

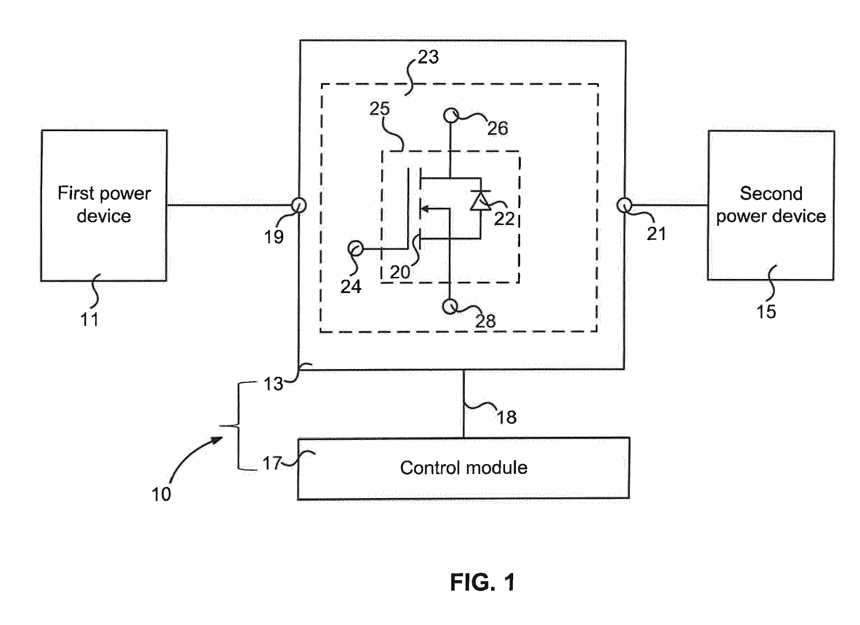

FIG. 1 illustrates a schematic diagram of a power conversion system 10 in accordance with an exemplary embodiment of the present disclosure. As is shown in FIG. 1, the power conversion system 10 includes a power conversion device 13 and a control module 17. In some embodiments, the power conversion device 13 includes a first port 19 coupled with a first power device 11 and a second port 21 coupled with a second power device 15. The control module 17 is arranged to be in electrical communication with the power conversion device 13 for providing switching control signals 18 to the power conversion device 13, so that the power conversion device 13 may perform power conversion in a unidirectional manner or a bi-directional manner according to the switching control signals 18.

The power conversion system 10 may be configured to perform different power conversion functions depending on various forms of the first power device 11 and the second power device 15. In some embodiments, an AC/DC power device capable of providing or receiving AC/DC power may be used as the first power device 11 and the second power device 15.

For example, in some embodiments, an AC power device capable of providing AC power such as AC power grid and a power generation device (e.g., wind turbine generator) may be used as the first power device 11. In some embodiments, a DC power device capable of being operated on DC power such as a DC motor, a battery, and an ultra-capacitor, may be used as the second power device 15. The power conversion system 10 may act as a rectifier for rectifying an input AC power provided from the AC power device 11 and providing an output DC power to the DC power device 15.

In some embodiments, a DC power device capable of providing DC power such as a solar panel, a battery, and an ultra-capacitor may be used as the first power device 11. In some embodiments, an AC power device capable of being operated on AC power such as an AC motor and AC power grid may be used as the second power device 15. The power conversion system 10 may act as an inverter for converting an input DC power provided from the DC power device 11 into an output AC power for driving the AC motor 15 or for grid transmission and distribution.

In some embodiments, a DC power device capable of providing DC power such as a solar panel, a battery, and an ultra-capacitor may be used as the first power device 11. In some embodiments, a DC power device capable of being operated on DC power such as a DC motor may be used as the second power device 15. The power conversion system 10 may act as a DC/DC converter for converting an input DC power provided from the DC power device 11 into an output DC power for providing to the other DC power device 15.

In some embodiments, an AC power device capable of providing AC power such as AC power grid and a power generation device (e.g., wind turbine generator) may be used as the first power device 11. In some embodiments, an AC power device capable of being operated on AC power may be used as the second power device 15. The power conversion system 10 may act as an AC/AC converter for converting an input AC power provided from the AC power source 11 into an output AC power for providing to the other AC power device 15.

The power conversion device 13 includes at least one switching unit 23. In some embodiments, the switching unit 23 includes a switching device 25. The switching device 25 includes a channel 20 and a body diode 22 integrated with the channel 20. In particular, the channel 20 of the switching device 25 is designed to have a forward channel conduction characteristic and reverse channel conduction characteristic. More specifically, in some embodiments, the switching device 25 may allow forward current to flow through a path defined by the channel 20. In some embodiments, the switching device 25 may allow reverse current to flow through at least two paths defined by the body diode 22 and the channel 20. Non-limiting example of the switching device 25 that is capable of being designed to have a reverse channel conduction characteristic may include a wide band-gap transistor such as a SiC transistor (e.g., SiC MOSFET) and a GaN transistor.

In the illustrated embodiment, the switching device 25 includes a first terminal 24, a second terminal 26, and a third terminal 28. In some embodiments, the first terminal 24 may be a gate terminal which is configured to receive switching control signals 18 provided from the control module 17. The second terminal 26 and the third terminal 28 may be source and drain terminals, respectively, which are configured to provide current flow paths in response to the switching control signals 18 supplied to the first terminal 24.

In some embodiments, different current flow paths may be formed in the switching unit 23 with different directions of current in response to different switching control signals. The current may include a positive direction current and a negative direction current according to the direction of the current flowing between the second terminal 26 and the third terminal 28. The positive direction current may flow from the second terminal 26 to the third terminal 28 and the negative direction current may flow from the third terminal 28 to the second terminal 26.

In some embodiments, the positive direction current may flow through a positive direction flow path provided by the channel 20 of the switching device 25 in response to a turn-on switching control signal supplied to the first terminal 24 of the switching device 25. In some embodiments, the negative direction current may flow through a first negative direction current flow path provided by the body diode 22 of the switching device 25 in response to a first turn-off switching control signal supplied to the first terminal 24 of the switching device 25. In some embodiments, the negative direction current may flow through a second negative direction current flow path provided by the channel 20 of the switching device 25 in response to another turn-on switching control signal supplied to the first terminal 24 of the switching device 25.

In some embodiments, the power conversion device 13 includes a single switching unit designed with the reverse channel conduction characteristic. In some embodiments, the power conversion device 13 includes more than one switching unit. For example, the power conversion device 13 may have an H-bridge configuration or topology of four switching units, and all or part of the four switching units may be designed to have the reverse channel conduction characteristic. In some embodiments, the power conversion device 13 may have a three-phase bridge configuration or topology of six switching units, and all or part of the six switching units may be designed to have the reverse channel conduction characteristic. In some embodiments, the power conversion device 13 may include other configurations with any number of switching units.

In order to keep the power conversion system 10 operate in a safe manner, the power conversion device 13 or the power conversion system 10 may include other circuits such as a snubber circuit (not shown) for keeping the switching device 23 work in a safe manner.

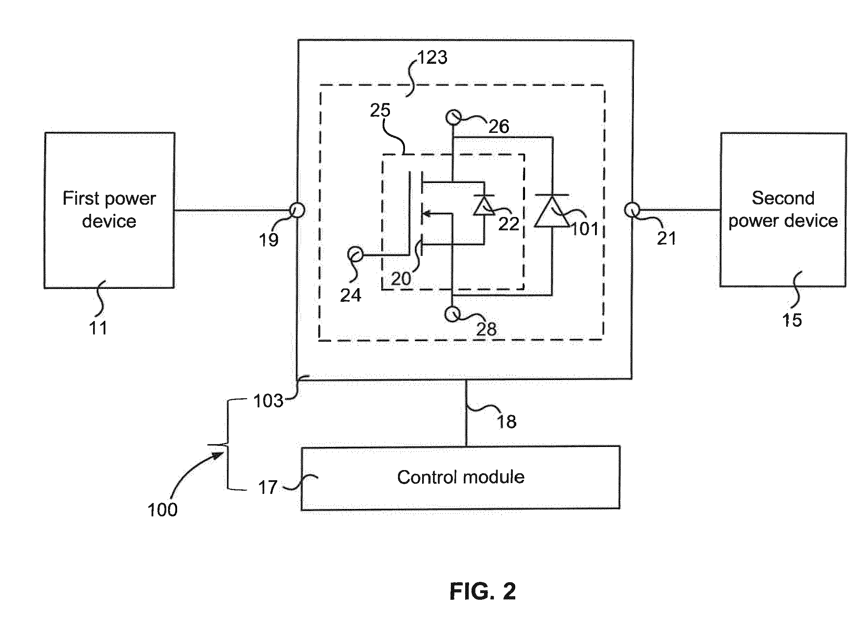

FIG. 2 is a schematic diagram of a power conversion system 100 in accordance with another exemplary embodiment of the present disclosure. The power conversion system 100 is substantially the same as what has been described in FIG. 1. Similarly, the power conversion system 100 includes a power conversion device 103 and a control module 17. Also, the power conversion device 103 includes at least one switching unit 123.

In some embodiments, the switching unit 123 shown in FIG. 2 further includes an anti-parallel diode 101 electrically coupled with the switching device 25 in anti-parallel. More specifically, the anode of the anti-parallel diode 101 is electrically coupled to the third terminal 28, and the cathode of the anti-parallel diode 101 is electrically coupled to the second terminal 26. In some embodiments, the switching unit 123 may include other devices (e.g., a capacitor) electrically coupled in series or in parallel with the switching device 25.

As is described earlier with reference to FIG. 1, the body diode 22 and the channel 20 may be configured to provide first and second negative direction current flow paths respectively for the negative direction current to flow through. In the illustrated embodiment of FIG. 2, in response to the first turn-off switching control signal supplied to the first terminal 24 of the switching device 25, the negative direction current may flow though a third negative direction current flow path provided by the anti-parallel diode 101 so that current burden on the body diode 22 of the switching device 25 can be reduced.

In some embodiments, the anti-parallel diode 101 may include a Si diode, or a wide band-gap diode such as a SiC diode and GaN diode. The benefit or advantage of using such wide band-gap diode such as SiC diode and GaN diode is that the overall power consumption of the power conversion device 13 can be reduced.

In general, after receiving an input power at the first port 19 of the power conversion device 103, a modulation strategy is implemented in the power conversion device 103 for converting the input power to an output power. For facilitating explanation, a conventional modulation strategy and a switching control strategy combined by the conventional modulation strategy with a reverse channel conduction strategy in accordance with the present disclosure will be described below. In some embodiments, the switching control strategy combined by the modulation strategy with the reverse channel conduction strategy is implemented to control the operation of at least one switching unit (e.g., switching unit 23 shown in FIG. 1 or switching unit 123 shown in FIG. 2).

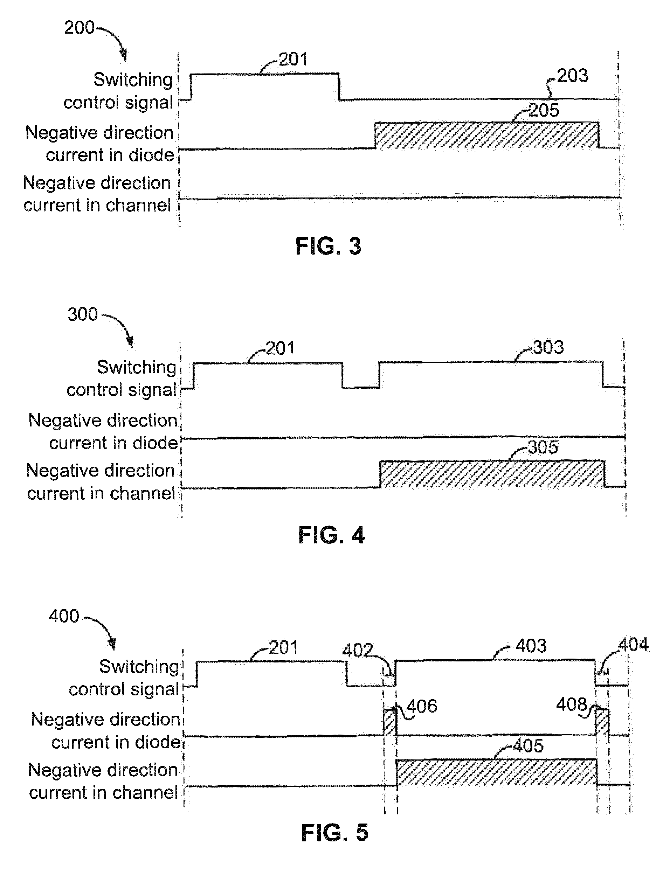

FIG. 3 shows a graph of various waveforms in a switching unit (shown in FIG. 1 or 2) in response to implementation of a conventional modulation strategy in accordance with an exemplary embodiment of the present disclosure. In some embodiments, a first turn-on switching control signal 201 and a first turn-off switching control signal 203 are generated by the conventional modulation strategy such as a pulse width modulation (PWM) strategy (e.g., space vector pulse width modulation (SVPWM) strategy, sinusoidal pulse width modulation (SPWM) strategy).

In some embodiments, in response to the first turn-on control signal 201 supplied to the first terminal 24 of the switching device 25, a positive direction current may flow through the positive direction current flow path provided by the channel 20 of the switching device 25. However, there is no current flowing through the diode (e.g., the body diode 22 shown in FIG. 1 and the anti-parallel diode 101 shown in FIG. 2) as well as the channel 20 of the switching device 25.

In some embodiments, in response to the first turn-off switching control signal 203 supplied to the first terminal 24 of the switching device 25, a negative direction current 205 may flow through the first negative direction current flow path provided by the body diode 22 (shown in FIG. 1) of the switching device 25. In some embodiments, the negative direction current 205 may flow through the third negative direction current flow path provided by the anti-parallel diode 101 (shown in FIG. 2). In some embodiments, the negative direction current may flow through both the first and third negative direction current flow paths.

As is shown in FIG. 3, during the time period that the first turn-off switching control signal 203 is supplied to the first terminal 24 of the switching device 25, there is no current flowing through the channel 20 (shown in FIG. 1 and 2) of the switching device 25. Therefore, body diode 22 and/or anti-parallel diode 101 make contribution to the conduction loss during the implementation of the conventional modulation strategy.

FIG. 4 shows a graph of various waveforms in a switching unit (shown in FIG. 1 or 2) in response to implementation of a switching control strategy combined by the conventional modulation strategy with a reverse channel conduction strategy in accordance with an exemplary embodiment of the present disclosure. In some embodiments, the first turn-on switching control signal 201 is generated by the conventional modulation strategy. A second turn-on switching control signal 303 is generated by the reverse channel conduction strategy so as to take full advantage of the reverse channel conduction characteristic.

As is shown in FIG. 4, in some embodiments, the first turn-on switching control signal 201 is followed by the second turn-on switching control signal 303. In some embodiments, in response to the second turn-on switching control signal 303 supplied to the first terminal 24 of the switching device 25, the channel 20 of the switching device 25 is turned on to conduct the current, or more specifically, a negative direction current flows from the third terminal 28 to the second terminal 26 via the channel 20 of the switching device 25. The conducting channel 20 of the switching device 25 has a lower resistance than the body diode 22 of the switching device 25 or the anti-parallel diode 101. Therefore, conduction loss can be reduced by keeping the negative direction current flow through the channel 20 of the switching device 25 which can improve the efficiency of the power conversion systems 10, 100.

FIG. 5 shows another graph of various waveforms of a switching unit (shown in FIG. 1 or 2) in response to implementation of the switching control strategy shown in FIG. 4 combined with a dead-time switching control strategy in accordance with an exemplary embodiment of the present disclosure. More specifically, part of a switching control signal (e.g., the second turn-on switching control signal) is replaced by a dead-time period of turn-off switching control signal. Then a final switching control signal is supplied to the first terminal 24 of the switching device 25. The purpose of implementation such a dead-time switching control strategy is that, a short-circuit fault which may occur when two switching units configured in series in a single bridge leg are conducting current simultaneously can be avoided.

As is shown in FIG. 5, in some embodiments, the first turn-on switching control signal 201 is followed by a second turn-on switching control signal 403. The second turn-on switching control signal 403 is generated with at least one second turn-off switching control signal (e.g., a dead-time turn-off switching control signal 402 and a dead-time turn-off switching control signal 404). Compared with the second turn-on switching control signal 303 (shown in FIG. 4), the dead-time turn-off switching control signals 402, 404 bring a dead-time delay at a rising edge and a dead-time advancement at a falling edge of the second turn-on switching control signal 403.

In addition, when the switching device 25 is switched from an off state in which the first dead-time switching control signal 402 is supplied to an on state in which the second turn-on switching control signal 403 is supplied, a zero-voltage switching can be achieved. More specifically, in response to the first dead-time turn-off switching control signal 402, the negative direction current 406 flows through the diode (e.g., the body diode 22 of the switching device 25 shown in FIG. 1 or the anti-parallel diode 101 shown in FIG. 2). The voltage between the second terminal 26 and the third terminal 28 is equal to the conducting voltage of the diode which is substantially close to zero. In response to the second turn-on switching control signal 403, the negative direction current 405 changes the flow path from the diode to the channel 20 of the switching device 25. That is, when the first dead-time turn-off switching control signal 402 transits to the second turn-on switching control signal 403, the switching device 25 is turned on with a zero voltage. As a result, the switching loss can be reduced. In response to the second dead-time turn-off switching control signal 404, the negative direction current 408 flows through the diode.

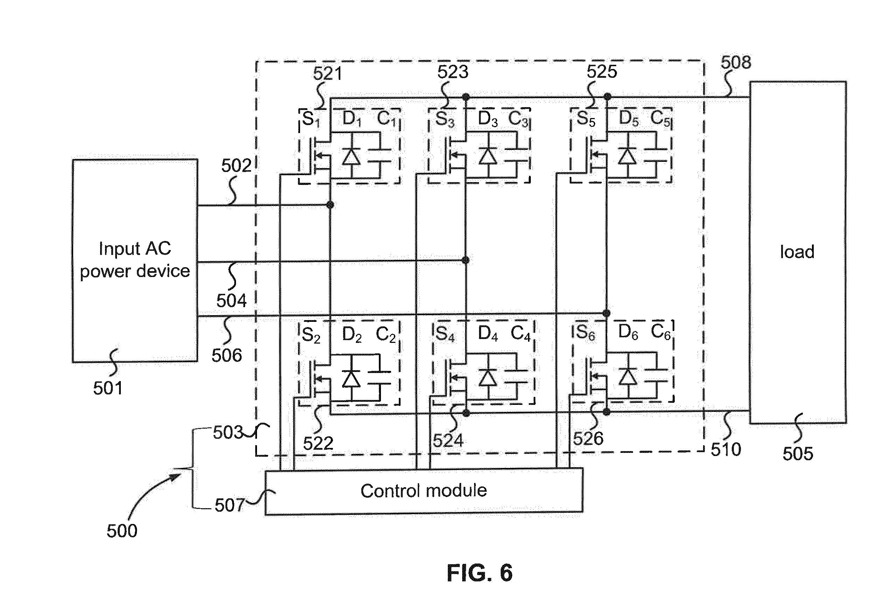

FIG. 6 shows a schematic diagram of a rectifier 500 used in an electric vehicle (EV) system (not shown) for charging an energy storage device such as a battery installed in the EV system. The EV system may include a pure electric vehicle system, a hybrid electric vehicle (HEV) system, and a fuel cell electric vehicle system. The rectifier 500 includes a three-phase power conversion device 503 and a control module 507. For purpose of description, although the rectifier 500 is shown to have a three-phase configuration in this embodiment, in other embodiments, the rectifier 500 may be configured in single-phase or multi-phase configurations. In the illustrated embodiment, the three-phase power conversion device 503 has six switching units 521 to 526 which are substantially the same as the switching unit 123 described in FIG. 2, each switching unit (e.g., 521 to 526) may include a SiC MOSFET, an anti-parallel diode, and a capacitor.

The first and second switching units 521, 522 coupled in series forming a first phase leg, the third and fourth switching units 523, 524 coupled in series forming a second phase leg, and the fifth and sixth switching units 525, 526 coupled in series forming a third phase leg. The three phase legs are configured to receive respective three-phase inputs from an input AC power device 501, and to provide an output DC power to a load 505 via two output terminals 508, 510.

More specifically, a third terminal of a first switching device S₁ and a second terminal of a second switching device S₂ are commonly coupled to a first input terminal 502 to receive a first phase power from the input AC power device 501. A third terminal of a third switching device S₃ and a second terminal of a fourth switching device S₄ are commonly coupled to a second input terminal 504 to receive a second phase power from the input AC power device 501. A third terminal of a firth switching device S₅ and a second terminal of a sixth switching device S₆ are commonly coupled to a third input terminal 506 to receive a third phase power from the input AC power device 501. The second terminals of each switching device S₁, S₃, S₅ are commonly coupled to a positive terminal 508 of the load 505 (e.g., a battery), and the third terminals of each switching device S₂, S₄, S₆ are commonly coupled to a negative terminal 510 of the load 505.

The control module 507 is in electrical communication with at least the three-phase power conversion device 503 for providing switching control signals to the first terminals of each switching device S₁ to S₆ in the three-phase rectifier 503. In some embodiments, the control module 507 may include any suitable programmable circuits or devices such as a digital signal processor (DSP), a field programmable gate array (FPGA), a programmable logic controller (PLC), and an application specific integrated circuit (ASIC). In some embodiments, the control module 507 may be implemented in the form of hardware, software, or a combination of hardware and software. Specific details as to how the switching control signals are generated by the control module 507 will be described as below.

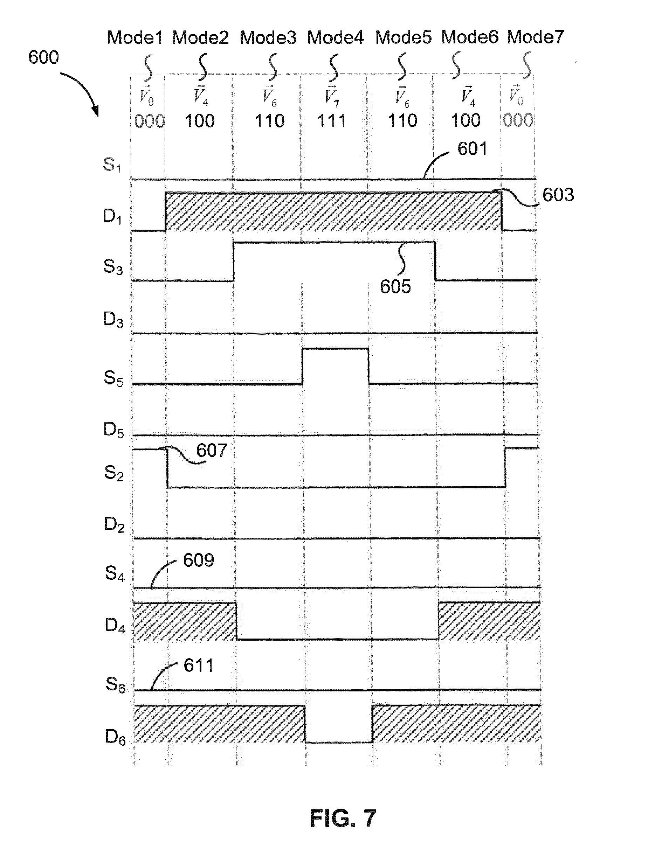

FIG. 7 shows a graph of various waveforms of the rectifier 500 shown in FIG. 6 which implements a space vector pulse width modulation (SVPWM) strategy in accordance with an exemplary embodiment of the present disclosure. In some embodiments, the switching state of each phase leg may include "0" and "1". For example, "0" represents the top switching device (e.g., S₁) in each phase leg is turned off and the bottom switching device (e.g., S₂) in each phase leg is turned on. "1" represents the top switching device (e.g., S₁) in each phase leg is turned on and the bottom switching device (e.g., S₂) in each phase leg is turned off. The switching states of the three phase legs can be grouped with eight switching vectors *̅V̅*̅₀(000), *̅V̅*̅₁(001), V̅₂̅(010), V̅₃̅(011), V̅₄̅(100), V̅₅̅(101), V̅₆̅(110), and V̅₇̅(111).

In the illustrated embodiment, the modulation strategy is based on a seven-segment SVPWM. As is shown in FIG. 7, the graph shows various waveforms of the six switching units shown in FIG. 6 with seven segments. Each segment is corresponding to a switching vector and an operation mode of the power conversion device 503. In the illustrated embodiment, conversion among the four switching vectors *̅V̅*̅₀(000), *̅V̅*̅₄(100), *̅V̅*̅₆(110), and *̅V̅*̅₇(111) results in a mode change of a power converting process. For example, when the switching vector *̅V̅*̅₀(000) is converted to *̅V̅*̅₄(100), the power converting process changes from mode 1 to mode 2, and when the switching vector *̅V̅*̅₄(100) is converted to *̅V̅*̅₆(110), the power converting process changes from mode 2 to mode 3.

When a negative direction current exists in the first switching unit 521, a negative direction current 603 (shown in mode 2 to mode 6) may flow through a first anti-parallel diode D₁ in response to a first turn-off switching control signal 601 (shown in mode 1 to mode 7) received by a first switching device S₁. When a positive direction current exists in the third switching unit 523, the positive direction current may flow through a third switching device S₃ in response to a first turn-on switching control signal 605 (shown in mode 3 to mode 5) received by the third switching device S₃. As is shown in FIG. 7, the other switching units are operated substantially in the same way as the first and third switching units 521, 523, thus, the detailed descriptions of the other switching units are omitted herein.

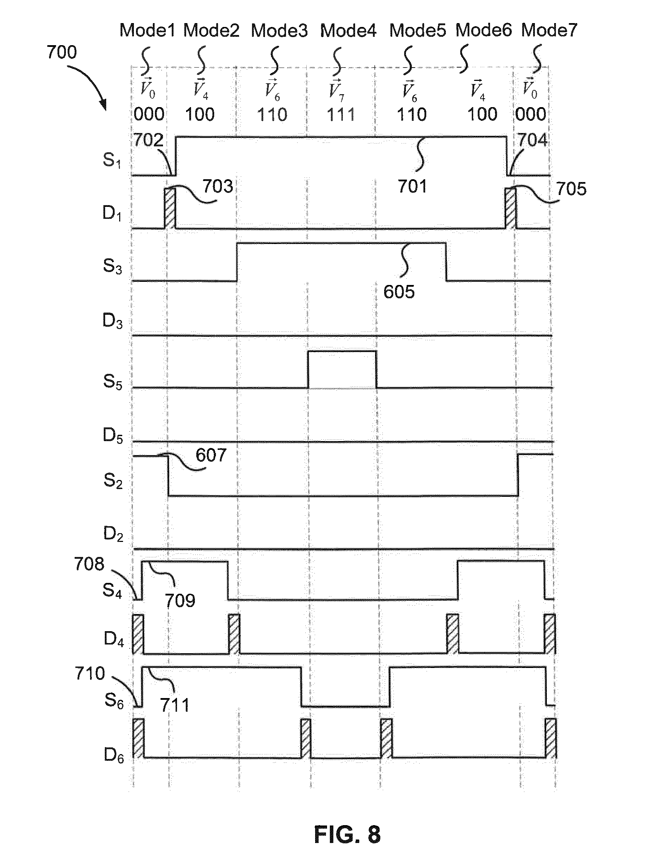

FIG. 8 shows a graph of various waveforms of the rectifier 500 shown in FIG. 6 which implements a combination of the SVPWM strategy and a reverse channel conduction strategy in accordance with an exemplary embodiment of the present disclosure. Compared with the SVPWM strategy shown in FIG. 7, similar action is taken when receiving a first turn-on switching control signal (e.g., 605), while some different actions may be taken when receiving a first turn-off switching control signal (e.g., 601 shown in FIG. 7) with the negative direction current flowing in each switching unit as is described in FIG. 6.

As is shown in FIG. 8, in response to a first dead-time turn-off switching control signal 702 (shown in mode 1) and a second dead-time turn-off switching control signal 704 (shown in mode 6) supplied to the first terminal of the first switching device S₁, the negative direction currents 703, 705 (shown in mode 2 and mode 6 respectively) are kept flowing through the first anti-parallel diode D₁. In response to a second turn-on switching control signal 701 (shown in mode 2 to mode 6) supplied to the first terminal of the switching device S₁, a current flow path of the negative direction current is changed from the first anti-parallel diode D₁ to a channel of the first switching device S₁ compared with the negative direction current 603 shown in FIG. 7.

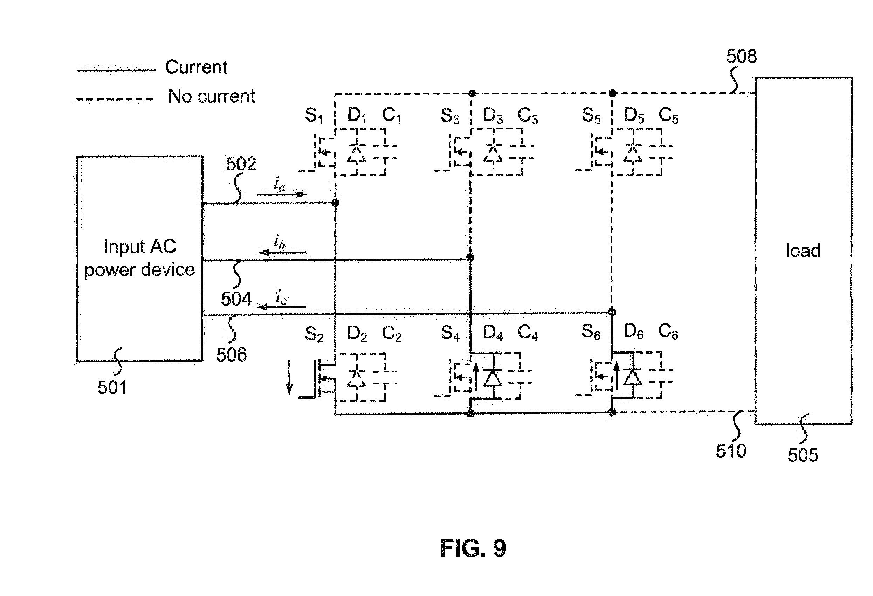

FIG. 9 shows a graph of current flow path of the rectifier 500 shown in FIG. 6 through the implementation of a SVPWM strategy in accordance with an exemplary embodiment of the present disclosure. More specifically, the current flow paths are formed by operating the rectifier 500 in mode 1 as is shown in FIG. 7. In mode 1, a first turn-on switching control signal 607 is supplied to a second switching device S₂, a first turn-off switching control signal 609 is supplied to a fourth switching device S₄, and a first turn-off switching control signal 611 is supplied to a sixth switching device S₆. As is shown in FIG. 9, a current flows out of the input AC power device 501 in the form of *iₐ* at the first input terminal 502 and flows back to the input AC power device 501 in the form of *i_{b}* and *i_{c}* at the second input terminal 504 and the third input terminal 506 respectively.

In some embodiments, *iₐ* can be referred to as a positive direction current which flows through a channel of the second switching device S₂. In addition, *i_{b}* and *i_{c}* can be referred to as negative direction currents which flow through a fourth anti-parallel diode D₄ and a sixth anti-parallel diode D₆ respectively.

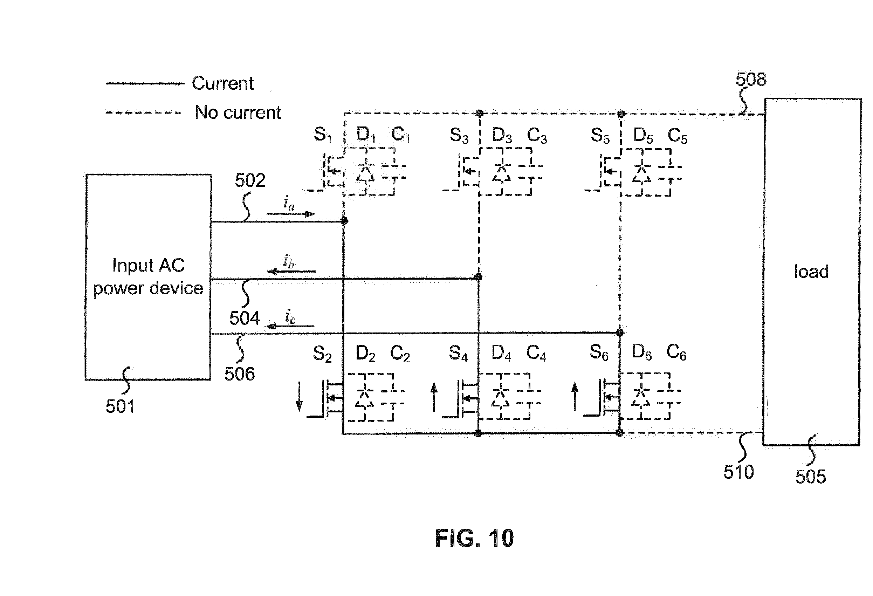

FIG. 10 shows a graph of a current flow path of the rectifier 500 shown in FIG. 6 which implements a combination of the SVPWM strategy and a reverse channel conduction strategy in accordance with an exemplary embodiment of the present disclosure. As is shown in mode 1 in FIG. 8, which is similar to the mode 1 shown in FIG. 7, the first turn-on switching control signal 607 is still provided to the second switching device S₂. Additionally, a second turn-on switching control signal 709 and a first dead-time turn-off switching control signal 708 are supplied to the fourth switching device S₄. A second turn-on switching control signal 711 and a first dead-time turn-off switching control signal 710 are supplied to the sixth switching device S₆. In alternate embodiments, the turn-off switching control signals 708, 711 can be generated without a dead-time.

Compared with the embodiment of FIG. 9, the positive direction current *iₐ* still flows through the channel of the second switching device S₂. However, the negative direction current *i_{b}* flows through a channel of the fourth switching device S₄ instead of the fourth anti-parallel diode D₄. The negative direction current *i_{c}* flows through a channel of the sixth switching device S₆ instead of the sixth anti-parallel diode D₆. As is described earlier, conducting a negative direction current in the channel rather than in the body diode or the anti-parallel diode can help reduce the conduction loss in association with the operation of the power conversion system. As a result, the efficiency of the power conversion system can be improved.

As will be understood by those familiar with the art, the present invention may be embodied in other specific forms without depending from the spirit or essential characteristics thereof. Accordingly, the disclosures and descriptions herein are intended to be illustrative, but not limiting, of the scope of the invention which is set forth in the following claims.

Various aspects and embodiments of the present invention are defined by the following numbered clauses:
1. A power conversion system, comprising:
   a control module configured to provide switching control signals and
   a power conversion device, comprising:
      a first port;
      a second port; and
      at least one switching unit electrically coupled between the first port and the second port, the switching unit comprising a switching device, the switching device comprises a channel and a body diode integrated with the channel, the switching device comprising a first terminal configured to receive switching control signals provided from the control module, a second terminal and a third terminal configured to provide current flow paths, wherein
         the channel of the switching device is configured to provide a positive direction current flow path to allow a positive direction current to flow from the second terminal to the third terminal in response to a first turn-on switching control signal supplied to the first terminal;
         the body diode of the switching device is configured to provide a first negative direction current flow path to allow a negative direction current to flow from the third terminal to the second terminal in response to a first turn-off switching control signal supplied to the first terminal; and
         the channel of the switching device is configured to provide a second negative direction current flow path to allow the negative direction current to flow from the third terminal to the second terminal in response to a second turn-on switching control signal supplied to the first terminal.
2. The power conversion system of clause 1, wherein the switching device comprises at least one of a silicon carbide (SiC) transistor and a gallium nitride (GaN) transistor.
3. The power conversion system of any preceding clause, wherein the first turn-on switching control signal and the first turn-off switching control signal are generated by implementing a modulation strategy.
4. The power conversion system of any preceding clause, wherein the modulation strategy comprises at least one of a space vector pulse width modulation (SVPWM) strategy and a sinusoidal pulse width modulation (SPWM) strategy.
5. The power conversion system of any preceding clause, wherein part of the first turn-off switching control signal is replaced by the second turn-on switching control signal.
6. The power conversion system of any preceding clause, wherein the first terminal of the switching device receives a first dead-time turn-off switching control signal with a dead-time delay at a rising edge of the second turn-on switching control signal and a second dead-time turn-off switching control signal with a dead-time advancement at a falling edge of the second turn-on switching control signal.
7. The power conversion system of any preceding clause, wherein when the first dead-time turn-off switching control signal transits to the second turn-on switching control signal, the switching device is turned on substantially with a zero voltage.
8. The power conversion system of any preceding clause, wherein the switching unit comprises an anti-parallel diode electrically coupled with the switching device in anti-parallel, wherein the anti-parallel diode is configured to provide a third negative direction current flow path to allow the negative direction current to flow from the third terminal to the second terminal in response to the first turn-off switching control signal supplied to the first terminal.
9. The power conversion system of any preceding clause, wherein the anti-parallel diode comprises at least one of a SiC diode and a GaN diode.
10. The power conversion system of any preceding clause, wherein part of the first turn-off switching control signal is replaced by the second turn-on switching control signal.
11. The power conversion system of any preceding clause, wherein the power conversion system comprises a rectifier configured to rectify an input alternating current (AC) power to an output direct current (DC) power in response to switching control signals provided from the control module for charging a load.
12. The power conversion system of any preceding clause, the power conversion system comprises at least one of
   an inverter, configured to receive switching control signals to invert an input DC power to an output AC power;
   a DC/DC converter, configured to receive switching control signals to convert an input DC power to an output DC power; and
   an AC/AC converter, configured to receive switching control signals to convert an input AC power to an output AC power.
13. A method for operating a power conversion system, comprising:
   providing a first turn-on switching control signal to a first terminal of a switching device of the power conversion system to allow a positive direction current to flow from a second terminal to a third terminal through a positive direction current flow path provided by a channel of the switching device; and
   providing a second turn-on switching control signal to the first terminal of the switching device of the power conversion system to allow a negative direction current to flow from the third terminal to the second terminal through a negative direction flow path provided by the channel of the switching device.
14. The method of any preceding clause, comprising replacing part of the first turn-off switching control signal by the second turn-on switching control signal.
15. The method of any preceding clause, comprising generating the first turn-on switching control signal and the first turn-off switching control signal by a modulation strategy.
16. The method of any preceding clause, wherein the modulation strategy comprises at least one of a space vector pulse width modulation (SVPWM) strategy and a sinusoidal pulse width modulation (SPWM) strategy.
17. The method of any preceding clause, comprising:
   providing a first dead-time turn-off switching control signal with a dead-time delay at a rising edge of the second turn-on switching control signal; and
   providing a second dead-time turn-off switching control signal with a dead-time advancement at a falling edge of the second turn-on switching control signal.
18. The method of any preceding clause, comprising turning on the switching device substantially with a zero-voltage switching (ZVS) strategy.

## Claims

1. A power conversion system (10), comprising:
a control module (17) configured to provide switching control signals and
a power conversion device (13), comprising:
a first port (19);
a second port (20); and
at least one switching unit (20) electrically coupled between the first port (19) and the second port (21), the switching unit (25) comprising a switching device (20), the switching device (20) comprises a channel and a body diode (22) integrated with the channel, the switching device comprising a first terminal configured to receive switching control signals provided from the control module (18), a second terminal and a third terminal configured to provide current flow paths, wherein
the channel of the switching device (20) is configured to provide a positive direction current flow path to allow a positive direction current to flow from the second terminal to the third terminal in response to a first turn-on switching control signal supplied to the first terminal;
the body diode (22) of the switching device (20) is configured to provide a first negative direction current flow path to allow a negative direction current to flow from the third terminal to the second terminal in response to a first turn-off switching control signal supplied to the first terminal; and
the channel of the switching device (20) is configured to provide a second negative direction current flow path to allow the negative direction current to flow from the third terminal to the second terminal in response to a second turn-on switching control signal supplied to the first terminal.

2. The power conversion system (10) of claim 1, wherein the switching device (20) comprises at least one of a silicon carbide (SiC) transistor and a gallium nitride (GaN) transistor.

3. The power conversion system (10) of any preceding claim, wherein the first turn-on switching control signal and the first turn-off switching control signal are generated by implementing a modulation strategy.

4. The power conversion system (10) of claim 3, wherein the modulation strategy comprises at least one of a space vector pulse width modulation (SVPWM) strategy and a sinusoidal pulse width modulation (SPWM) strategy.

5. The power conversion system (10) of any preceding claim, wherein part of the first turn-off switching control signal is replaced by the second turn-on switching control signal.

6. The power conversion system (10) of any preceding claim, wherein the first terminal of the switching device (20) receives a first dead-time turn-off switching control signal with a dead-time delay at a rising edge of the second turn-on switching control signal and a second dead-time turn-off switching control signal with a dead-time advancement at a falling edge of the second turn-on switching control signal.

7. The power conversion system (10) of claim 6, wherein when the first dead-time turn-off switching control signal transits to the second turn-on switching control signal, the switching device is turned on substantially with a zero voltage.

8. The power conversion system (10) of any preceding claim, wherein the switching unit (20) comprises an anti-parallel diode (22) electrically coupled with the switching device in anti-parallel, wherein the anti-parallel diode is configured to provide a third negative direction current flow path to allow the negative direction current to flow from the third terminal to the second terminal in response to the first turn-off switching control signal supplied to the first terminal.

9. The power conversion system (10) of any preceding claim, wherein part of the first turn-off switching control signal is replaced by the second turn-on switching control signal.

10. A method for operating a power conversion system (10), comprising:
providing a first turn-on switching control signal to a first terminal (24) of a switching device (20) of the power conversion system (10) to allow a positive direction current to flow from a second terminal (26) to a third terminal (28) through a positive direction current flow path provided by a channel of the switching device (20); and
providing a second turn-on switching control signal to the first terminal (24) of the switching device (20) of the power conversion system (10) to allow a negative direction current to flow from the third terminal (28) to the second terminal (26) through a negative direction flow path provided by the channel of the switching device (20).

11. The method of claim 10, comprising replacing part of the first turn-off switching control signal by the second turn-on switching control signal.

12. The method of claim 10 or claim 11, comprising generating the first turn-on switching control signal and the first turn-off switching control signal by a modulation strategy.

13. The method of any of claims 10 to 12, wherein the modulation strategy comprises at least one of a space vector pulse width modulation (SVPWM) strategy and a sinusoidal pulse width modulation (SPWM) strategy.

14. The method of any of claims 10 to 13, comprising:
providing a first dead-time turn-off switching control signal with a dead-time delay at a rising edge of the second turn-on switching control signal; and
providing a second dead-time turn-off switching control signal with a dead-time advancement at a falling edge of the second turn-on switching control signal.

15. The method of any of claims 10 to 14, comprising turning on the switching device (20) substantially with a zero-voltage switching (ZVS) strategy.
